# EUROPÄISCHE PATENTSCHRIFT

(11) **EP 3 695 132 B1**
(45) Veröffentlichungstag und Bekanntmachung des Hinweises auf die Patenterteilung: **19.04.2023**
(21) Anmeldenummer: 18786258.6
(22) Anmeldetag: 08.10.2018
(51) Int. Cl.: F16D 51/22, F16D 65/22, F16D 65/56, F16D 121/24, F16D 125/36

(54) **SPREIZEINHEIT FÜR TROMMELBREMSE MIT VERSCHLEISSWEGNACHSTELLUNG UND DIE TROMMELBREMSE**
SPREADER UNIT FOR A DRUM BRAKE, COMPRISING WEAR TRAVEL ADJUSTMENT, AND THE DRUM BRAKE
UNITÉ D'ÉCARTEMENT POUR FREIN À TAMBOUR À RATTRAPAGE D'USURE ET FREIN À TAMBOUR

(30) Priorität: 12.10.2017 DE 102017218219
(43) Veröffentlichungstag der Anmeldung: 19.08.2020
(73) Patentinhaber: Continental Automotive Technologies GmbH, 30165 Hannover (DE)
(72) Erfinder: BACH, Uwe, 65527 Niedernhausen (DE); GÄDKE, Martin, 65719 Hofheim/Ts. (DE); VON HAYN, Holger, 61118 Bad Vilbel (DE); SEFO, Ahmed, 65931 Frankfurt (DE); HOFFMANN, Jens, 64285 Darmstadt (DE); MESSNER, Adrian, 55116 Mainz (DE); RITTER, Wolfgang, 61440 Oberursel/Ts. (DE)
(74) Vertreter: Continental Corporation
(86) Internationale Anmeldenummer: PCT/EP2018/077334
(87) Internationale Veröffentlichungsnummer: WO 2019/072768

(56) Entgegenhaltungen:
- DE-A1-102014 226 268
- FR-A1- 2 869 661
- GB-A- 1 355 339

## Beschreibung

Die Erfindung betrifft eine elektromechanisch antreibbare Spreizeinheit für eine Trommelbremse mit Verschleißwegnachstellung sowie die zugehörige Trommelbremse.

Die modernen Fahrzeuge werden mit dem zunehmenden Automatisierungsgrad immer mehr Systeme elektromechanisch angetrieben. Es besteht somit ein nahliegender Wunsch nach Verwendung von besonders einfachen und robusten Trommelbremsen als elektromechanisch angetriebene Betriebsbremse. Bei Betrieb von bekannten und weit verbreiteten Trommelbremsen werden zwei drehbar angelehnten Bremsschuhe, durch mindestens eine Spreizeinheit auseinander gespreizt und dabei gegen die radiale Innenwand einer topfförmigen Bremstrommel gepresst. Verwendung von robusten, wartungs- und reibungsarmen Kugel-Rampen-Vorrichtungen, sogenannten Ball-in-Ramp, als Rotations-Translationswandler ist ebenso bekannt.

Um eine Trommelbremse sicher zu betreiben ist ein zuverlässiger Verschleißwegausgleich erforderlich. Bekannte konventionelle, der Spreizeinheit nachgeschalteten Nachstellvorrichtungen erhöhen jedoch den Montage- und Serviceaufwand der Trommelbremse, sind einer starken Verschmutzung durch Bremsstaub ausgesetzt und schränken einen automatisierten, elektronisch gesteuerten Betrieb einer Bremse erheblich ein.

Nachteilig bei Kugel-Rampen-Vorrichtungen ist zudem ein konstruktionsbedingt relativ geringer Hub, mit dem alleine ein betriebsbedingter Verschleiß der Bremsbacken einer Trommelbremse nicht ausreichend ausgeglichen werden kann. Des Weiteren erhöht sich bei einem verschleißbedingt vergrößerten Hub die Reaktionszeit der Bremse.

Ein weiterer Nachteil ist das Verhalten einer Kugel-Rampen-Vorrichtung bei einem sogenannten Heißabstellen - Parken mit einer heißgefahren Bremstrommel, welche beim Erkalten schrumpft. Weil eine Kugel-Rampen-Vorrichtung starr ist, kann dies eine unzulässige Krafterhöhung auf die inneren Bremsenkomponenten und damit Beschädigungen bewirken. Bei herkömmlichen Trommelbremsen ist es bekannt, zur Betätigung der Bremsschuhe für eine Feststellbremse ein Bremsseil ausreichender Länge zu verwenden und das Schrumpfen der Bremstrommel durch seine Elastizität zu kompensieren. Eine derartiger Seilantriebverringert jedoch die Steifigkeit und Reaktionsgeschwindigkeit der Bremse und begrenzt die maximal erreichbare Bremskraft durch di Zugfestigkeit des Seils, wodurch eine Verwendung als Betriebsbremse zumindest eingeschränkt bis gar unmöglich wird.

Eine gattungsgemäße Spreizeinheit mit den Merkmalen des Oberbegriffs des Patentanspruchs 1 geht aus der DE 10 2014 226 268 A1 hervor. Dabei wird die Linearbewegung von Bremsschuhaufnahmen durch zwei Kugel-Rampen-Vorrichtungen erzeugt, wobei eine erste Kugel-Rampen-Vorrichtung einen ersten um eine mittlere Achse drehbar angeordneten Betätigungskolben und eine zweite Kugel-Rampen-Vorrichtung einen zweiten, um dieselbe Achse drehbar angeordneten Betätigungskolben umfasst und wobei eine Nachstelleinrichtung zum Ausgleich des Verschleißwegs achszentriert und innerhalb des Gehäuses der Spreizeinheit im Wesentlichen zwischen den beiden Betätigungskolben angeordnet ist, und wobei zudem ein Distanzkörper erforderlich ist.

Es stellt sich somit eine Aufgabe, eine alternativ verbesserte Spreizeinheit für eine Trommelbremse anzubieten, mit der eine robuste und zuverlässige Verschleißwegnachstellung bei allen betriebszuständen unter Beibehaltung möglichst kurzer Reaktionszeiten realisierbar ist, welche durch einen elektronisch gesteuerten elektromechanischen Antrieb betätigbar und zudem möglichst kompakt und schmutzresistent ist.

Die Aufgabe wird erfindungsgemäß durch Komponenten mit Merkmalskombinationen nach Patentanspruch 1 gelöst. Die Erfindung sieht vor, dass die Nachstelleinrichtung einen im Kraftfluss mit dem ersten Betätigungskolben stehenden Nachstellkolben und eine mit dem Nachstellkolben über axiale Zahnkränze im Eingriff stehende Rasthülse umfasst. Dabei ist die Rasthülse gegenüber der zweiten Bremsschuhaufnahme verdrehgesichert, gegenüber dem zweiten Betätigungskolben axial begrenzt verschiebbar und zugleich gegen den Nachstellkolben elastisch vorgespannt angeordnet ist. Dadurch kann bei einem einfachen Gesamtaufbau der Trommelbremse die Verschleißwegnachstellung vollautomatisiert erfolgen und die Vorteile von Kugel-Rampen-Vorrichtungen wie hohe Steifigkeit und Kraftübertragung sowie geringe Reibverluste besonders effektiv ausgenutzt werden.

Durch eine derartige hochintegrierte Funktionsintegration kann mit nur wenigen Bauteilen ein kompaktes, robustes, schmutzresistentes, einfach zu monierendes und flexibel einsetzbares Spreizmodul erzeugt werden. Weil nahezu sämtliche Komponenten gut geschützt in einem gemeinsamen Gehäuse untergebracht sind können viele Bauteile kostengünstig aus Kunststoff hergestellt werden. Eine Trommelbremse kann dadurch in Komponenten vormontiert und in Modulbauweise angeboten und flexibel kombiniert werden, was einer vereinfachten Logistik ein verbessertes Handling am Band ermöglicht und die Kugeln der Kugel-Rampen-Vorrichtungen in ihrer Einbauposition gehalten werden.

Unteransprüche geben weitere erfindungsgemäße Ausführungen und Weiterbildungen an.

Gemäß einer Weiterbildung der Erfindung werden die Betätigungskolben, axial schwimmend in einer Antriebshülse angeordnet und gegen diese verdrehgesichert, wobei die Antriebshülse im Gehäuse um die mittlere Achse drehbar gelagert ist und von einer elektromechanischen Antriebseinheit, vorzugsweise über eine Außenverzahnung, mit Drehmoment versehen wird. Weil hierbei ein gesonderter Axialausgleich irrelevant wird, kann antriebsseitig statt Geradeverzahnung eine wesentlich leiser laufende Schrägverzahnung verwendet werde.

Gemäß einer Bevorzugten Ausführungsform der Erfindung sind die Zahnkränze der Nachstelleinrichtung miteinander korrespondierend auf einem gleichen Umfangskreis durch in jeweils eine Umfangsrichtung ausgerichtete und geneigte im Wesentlichen Rampen ausgeführt, die gegenseitige Verdrehung der Zahnkränze in eine Umfangsrichtung gesperrt ist und in die entgegengesetzte Umfangsrichtung eine axial gerichtete Kraft erzeugt.

Gemäß der bevorzugten Weiterbildung umfasst die zweite Kugel-Rampen-Vorrichtung einen gegenüber der zweiten Bremsschuhaufnahme verdrehgesichert angeordneten Spreizkolben. Dieser Spreizkolben verfügt über einen in Richtung erster Betätigungskolben vorgestreckten Schaft, wobei die Rasthülse auf diesem Schaft verdrehgesichert sowie axial verschiebbar geführt angeordnet ist. Bevorzugt wird die die Rasthülse durch eine Druckfeder gegen den Nachstellkolben gepresst, die sich innerhalb des zweiten Betätigungskolbens an diesem abstützt. Damit wir eine hohe Kompaktheit erreicht und die Baulänge der Spreizeinheit reduziert.

Eine besonders vorteilhafte Ausführungsform sieht vor, dass der erste Betätigungskolben und der Nachstellkolben über eine mit der mittleren Achse koaxiale Schraubengewindeverbindung miteinander verbunden sind. Hierdurch ist eine einfache Entnahme der Einheit mit Nachstellkolben möglich und dadurch ein ergonomisch günstiges einfaches Rückstellen der Nachstelleinrichtung im Servicefall bei Bremsschuhwechsel, dies bei hoher Funktionszuverlässigkeit und verringerter Fehleranfälligkeit.

Gemäß einer ebenso bevorzugten Ausführungsform der Erfindung wird jede Bremsschuhaufnahme in Richtung der jeweils zugeordneten Kugel-Rampen-Vorrichtung axial verschiebbar angeordnet, wobei dazwischen ein elastisch kompressibles Federelement eingespannt ist. Durch die Kompression des Federelements kann das Schrumpfen der Bremstrommel beim Erkalten ausgeglichen werden und die erfindungsgemäße Spreizeinheit ohne zusätzliche Komponenten uneingeschränkt als Feststellbremse verwendet werden. Zudem können unterschiedliche Spreizkolbeneinheiten mit verschiedenen Federsteifigkeiten und Schnittstellen an den Bremsschuhaufnahmen als vormontierte Baugruppen beziehungsweise Module für eine kosteneffektive Variantenbildung und flexible Anpassbarkeit der Trommelbremse an unterschiedliche Anforderungen angeboten werden.

Gemäß einer weiteren vorteilhaften Ausführungsform kann die die erfindungsgemäße Spreizeinheit in der Trommelbremse schwimmend entlang der mittleren Achse gelagert werden, wodurch ohne zusätzliche Bauteil ein effektiver Ausgleich des ungleichmäßigen Anlegens der Beläge an der Bremstrommel erreicht wird.

Des Weiteren beansprucht die Erfindung eine Trommelbremse, umfassend wenigstens eine erfindungsgemäße Spreizeinheit. Besonders effektiv kann eine derartige Spreizeinheit bei einer Simplex-Trommelbremse verwendet werden, wobei andere Trommelbremsbauarten ebenso verwendet werden können.

Weitere Merkmale, Vorteile und Anwendungsmöglichkeiten der Erfindung gehen aus der nachfolgenden Beschreibung eines erfindungsgemäßen Ausführungsbeispiels hervor. Hierbei zeigen:
Fig.1 eine stark vereinfachte Schnitteinsicht einer Trommelbremse in Simplex Bauweise mit einer erfindungsgemäßen Spreizeinheit.
Fig.2 eine erfindungsgemäße Ausführungsform der Spreizeinheit in Axialschnitt
Fig.3 die Spreizeinheit gemäß Fig.2 in räumlicher Explosionsdarstellung.
Fig.4 teilweise demontierte Spreizeinheit gemäß Fig.2 in Axialschnitt.
Fig.5 räumliche Ansicht der Darstellung gemäß Fig.4

Weil die Die grundsätzliche Funktionsweise sowohl einer Trommelbremse als auch einer Kugel-Rampen-Vorrichtung hinreichend bekannt sind, wird nachfolgend lediglich auf die erfindungswesentliche Funktionseigenschaften eingegangen.

### Fig.1

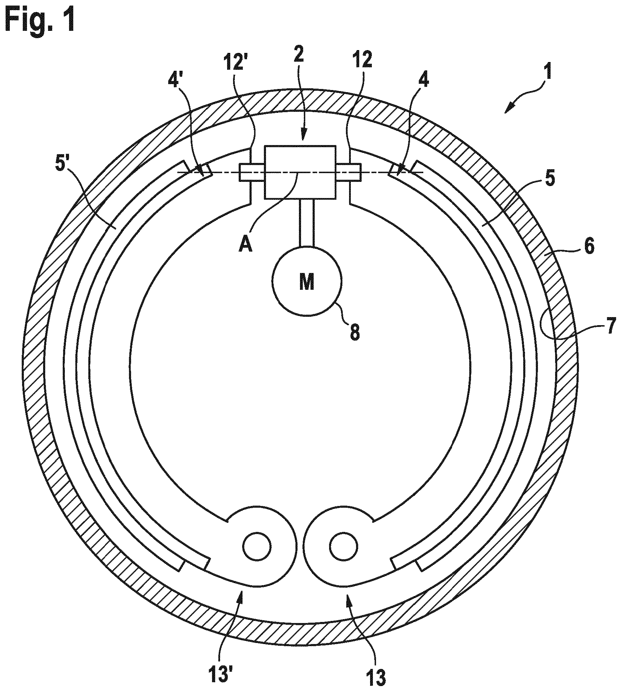

Fig.1 zeigt beispielhaft und stark vereinfacht eine gattungsgemäße Trommelbremse in Simplex-bauweise. Andere bekannte Bauweisen von Trommelbremsen sind jedoch innerhalb der Erfindung ebenso adaptierbar.

Zwei, jeweils an ihrem ersten Ende 13,13' drehbar angelehnten, im Wesentlichen kreisbogenförmigen Bremsschuhe 4,4' werden jeweils an ihrem zweiten Ende 12,12' durch eine Spreizeinheit 2 auseinander gespreizt und dabei gegen die radiale Innenwand 7 einer topfförmigen Bremstrommel 6 gepresst. Die Bremstrommel 6 ist mit einem nicht gezeigten Fahrzeugrad verbunden und verdreht sich zusammen mit diesem gegenüber den Bremsschuhen 4,4'. Die an den Bremsschuhen 4,4' angebrachten Bremsbelege 5,5' reiben dabei an der Innenwand 7. Durch den Verschleiß der Bremsbelege 5,5' vergrößert sich der für eine Bremsung erforderliche Spreizweg kontinuierlich bis hin zur einer definierten Verschleißgrenze.

Um eine eventuell unsymmetrische, ungleichmäßige Anlage der Beläge 5,5' an der Bremstrommel 6 auszugleichen ist die Spreizeinheit 2 in der Trommelbremse vorzugsweise entlang deren zentralen Achse A schwimmend gelagert angeordnet.

### Fig.2

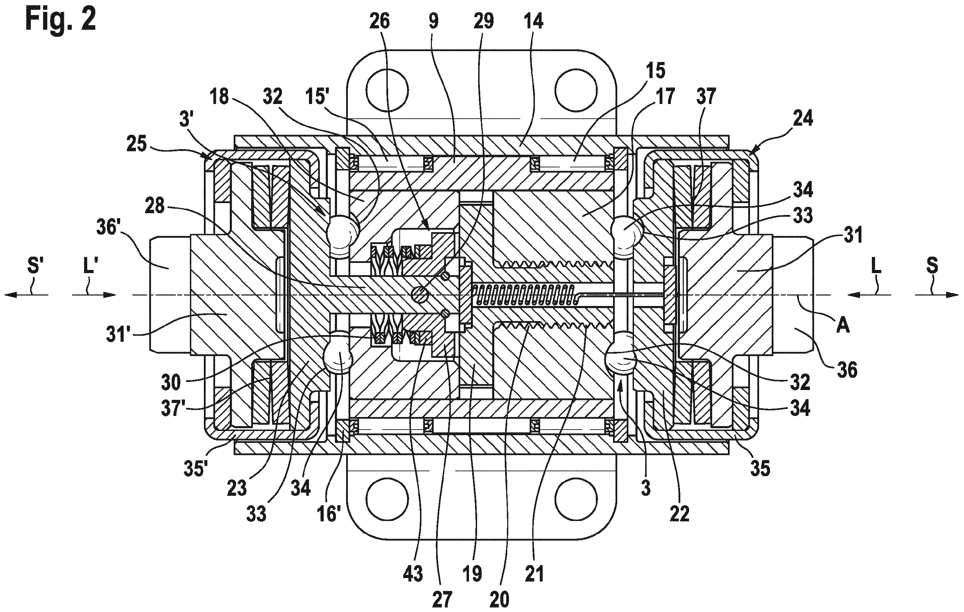

Fig.2 zeigt eine erfindungsgemäße Ausführungsform der Spreizeinheit 2 in einem unbetätigten Ausgangszustand in Axialschnitt. Die Spreizeinheit 2 weist zwei Kugel-Rampen-Vorrichtungen 3,3' auf, welche über die Bremsschuhaufnahmen 31,31' auf die Bremsschuhe 4,4' einwirken. Jeder Bremsschuhaufnahme 31,31' verfügt hierfür über einen Querschlitz 36,36', in dem jeweils ein flaches Ende 12,12' eines Bremsschuhs 4,4' angeordnet wird. Die Spreizeinheit 2 weist ferner ein im Wesentlichen Rohrförmiges, mit einem Montageflansch ausgestattetes Gehäuse 14 auf. Der Antrieb der Spreizeinheit 2 erfolgt durch eine in der Fig.1 angedeutete elektromotorische Antriebseinheit 8 auf die Außenverzahnung 10 einer Antriebshülse 9, welche hierdurch um die Achse A verdreht wird und sich im Gehäuse 14 über Rolllager 15,15'abstützt und durch Sicherungselemente 16,16' axial fixiert ist. Weil die erfindungsgemäße Trommelbremse 1 als Betriebsbremse vorgesehen ist, werden sämtliche Bremsvorgänge und nicht etwa lediglich eine statische konstante Krafteinwirkung beim Parken über die Antriebshülse 9 initiiert. In der gezeigten Ausführungsform sind die Rolllager 15,15' als Nagellager ausgelegt, andere Rolllagertypen sind innerhalb der Erfindung ebenso zulässig.

Der Bremsvorgang erfolgt über die Kugel-Rampen-Vorrichtungen 3,3` auf die Bremsschuhaufnahmen 31,31` und die mit diesen im Eingriff stehenden Bremsschuhe 4,4'.

Jede Kugel-Rampen-Vorrichtung 3,3` umfasst im Wesentlichen jeweils einen Spreizkolben 22,23, jeweils einen, gegenüber dem Spreizkolben 24,25 um die Achse A drehbaren Betätigungskolben 17,18 und eine Vielzahl von Kugeln 34. An ihren jeweils zueinander gerichteten Stirnseiten weisen der erste Betätigungskolben 17 und der erste Spreizkolben 22 beziehungsweise der zweite Betätigungskolben 18 und der zweite Spreizkolben 23 jeweils am gleichen Umfangskreis eine gleiche Anzahl von Vertiefungen 32,33 auf, die in Umfangsrichtung regelmäßig verteilt angeordnet sind. Die Vertiefungen 32 in den Betätigungskolben 17,18 sind jeweils eine erste Umfangsrichtung allmählich abflachend ausgebildet, die Vertiefungen 33 in den Spreizkolben 22,23 korrespondieren mit den Vertiefungen 22, sind jedoch in eine zweite, gegengerichtete Umfangsrichtung abgeflacht. Zwischen jeder Vertiefung 32 und 33 ist jeweils eine Kugel 34 angeordnet. Durch die Verdrehung des Betätigungskolbens17,18 gegenüber dem Spreizkolben 22,23 in eine Betätigungsrichtung rollen die Kugeln 34 in die abflachenden Bereiche der Vertiefungen 32,33 und schieben die die Kolbenpaarungen auseinander (und vice versa).

Die beiden Spreizkolben 22,23 sind in Bezug auf das Gehäuse 14 verdrehgesichert und somit nur linear entlang der Achse A versetzbar. In der gezeigten Ausführungsform wird die Verdrehsicherung durch die Abstützung der jeweiligen Bremsschuhaufnahme 31,31' über den Querschlitz 36,36' am Bremsschuh 4,4' sichergestellt. Jede Bremsschuhaufnahme31,31' ist dabei über eine randseitig nach innen abgekantete Außenhülse 35,35' mit dem jeweiligen zugeordneten Spreizkolben 22,23 verdrehgesichert verbunden. Dabei ist jeder Spreizkolben 22,23 gegenüber der zugeordneten Bremsschuhaufnahme 31,31' innerhalb der Außenhülse35,35' axial beabstandet, mit jeweils einem dazwischen vorgespannten Federelement 37,37' angeordnet. Dadurch wird eine begrenzte lineare Bewegung in Axialrichtung ermöglicht und hierdurch sichergestellt, dass beim Trommelschrumpfen die Spannkrafterhöhung durch die Kompression des Federelemente 37 begrenzt wird um eine Beschädigung der Bremse auszuschließen. Mit dem vorgenannten Aufbau wird auch eine robuste, einfach zu handhabende, vormontierbare Spreizkolbeneinheit 24,25 geschaffen, die im Wesentlichen jeweils einen Spreizkolben 22,23 eine Bremsschuhaufnahme 31,31' ein Federelement 37,37' und eine Außenhülse 35,35' umfasst.

Weitere, hier nicht gezeigte Verdrehsicherungslösungen für Spreizkolben 22,23, beispielsweise mittels verschiedener Axialführungen gegenüber dem Gehäuse 14 sind innerhalb der Erfindung ebenfalls vorstellbar.

Die Übertragung von für die Kugel-Rampen-Vorrichtungen 3,3' notwendigen Drehbewegung wird über einen ersten Betätigungskolben 17 und einen zweiten Betätigungskolben 18 ausgeführt.

Die beiden Betätigungskolben 17,18 sind in der Antriebshülse 9, zwecks gleichmäßigen Anlegens der Bremsbelege 5,5' an die Innenwand 7, axial schwimmend sowie mittels Axialführung 11 verdrehgesichert angeordnet. In der dargestellten Ausführungsform ist die Axialführung mittels einer axialen Verzahnungsgeometrie, insbesondere axialen Keilverzahnung, ausgebildet. Weitere Ausführungsformen wie beispielsweise in Axialnute eingreifenden Nasen und Dergleichen sind innerhalb der Erfindung ebenso zulässig.

Eine Nachstelleinrichtung 26 umfasst im Wesentlichen einen Nachstellkolben 19, der im Kraftfluss mit dem ersten Betätigungskolben 17 steht und eine mit dem Nachstellkolben 19 im Eingriff stehenden Rasthülse 27, die gegenüber dem zweiten Spreizkolben 28 verdrehgesichert jedoch axial begrenzt verschiebbar sowie gegen den Nachstellkolben elastisch vorgespannt angeordnet ist.

Ein gesonderter Nachstellkolben 19 ist in den ersten Betätigungskolben 17 mit einem Gewindeabschnitt 21 bis auf Anschlag in eine Gewindebohrung 20 hineingedreht und liegt somit im Kraftfluss zwischen dem ersten Betätigungskolben 17 und dem zweiten Betätigungskolben 18. Der Nachstellkolben 19 weist n seiner dem zweiten Betätigungskolben 18 zugewandten Stirnseite einen axial vorgestreckten ringförmigen ersten Zahnkranz 38 mit mehreren, in eine Umfangsrichtung geneigten zahnförmigen Rampen 40 beziehungsweise Rasten auf.

Die Rasthülse 27 ist im Wesentlichen in dem zweiten Betätigungskolben 18 integriert angeordnet. Sie weist einen zu dem ersten Zahnkranz 38 korrespondierenden, axial vorgestreckten ringförmigen zweiten Zahnkranz 39 auf, welcher ebenso aus mehreren, in eine entgegengesetzte Umfangsrichtung geneigten zahnförmigen Rampen 41 beziehungsweise Rasten besteht.

Die Rasthülse 27 ist über eine Zentralbohrung auf einem Schaft 28 des zweiten Spreizkolbens 23 axial verschiebbar sowie in Bezug auf das Gehäuse 14 verdrehgesichert gelagert. Zur Verdrehsicherung ist bei der gezeigten Ausführungsform in dem Schaft 28 ein Querstift 29 vorgesehen, an dem sich die Rasthülse 27 über einen axial vorgestreckten geschlitzten Kragen 42 in beide Umfangsrichtungen abstützt.

Die Rasthülse 27 wird durch eine an dem zweiten Betätigungskolben 18 abgestützte Druckfeder 30, permanent mit leichter Kraft auf den Zahnkranz 38 des Nachstellkolbens 19 gedrückt. Eine Gleitscheibe 43 verringert die Reibung und die Verdrehung der Druckfeder 30 bei Drehung des Zweiten Betätigungskolbens 18. Die Druckfeder 30 ist in der gezeigten Ausführungsform als eine Wellenfeder ausgebildet. Weitere Ausführungsformen wie beispielsweise eine Spiralfeder oder ein Tellerfederpaket sind innerhalb der Erfindung ebenso zulässig.

Beim Antreiben der beiden Betätigungskolben 17 und 18 durch die Antriebshülse 9 erfolgt eine Verdrehung des Nachstellkolbens 19 relativ zur der in Umfangsrichtung unbeweglichen Rasthülse 27. Hierbei laufen die Rampen 40 des Nachstellkolbens 19 bei jeder Betätigung beziehungsweise Bremsung auf die Rampen 41 der Rasthülse 27 auf und drücken diese entgegen die Federwirkung der Druckfeder 30 geringfügig in den zweiten Betätigungskolben 18 hinein. Bei zunehmenden Verschleiß der Bremsbeläge 5,5` vergrößert sich der erforderliche Hub und somit der Winkelmaß der Verdrehung der Antriebshülse 9 und des daran gekoppelten Nachstellkolbens 19. Sobald das das Winkelmaß der Umfangslänge einer Rampe 38 beziehungsweise 41 übersteigt, springt die Axialverzahnung zwischen der Rasthülse 27 und dem Nachstellkolben 19 in die nächste Raste. Wird danach die Bremse nach einer Bremsung gelöst, dreht sich der erste Betätigungskolben 17 zusammen mit der Antriebshülse 9 in die unbetätigte Ausgangsstellung zurück. Der Nachstellkolben 19 wird jedoch durch die verdrehgesicherte Rasthülse 27 am Rückdrehen gehindert und dadurch aus dem ersten Betätigungskolben 17 um das entsprechende Maß herausdreht. Somit erfolgt ein Nachstellvorgang schrittweise vollautomatisch weggesteuert, beim Lösevorgang der Trommelbremse 1.

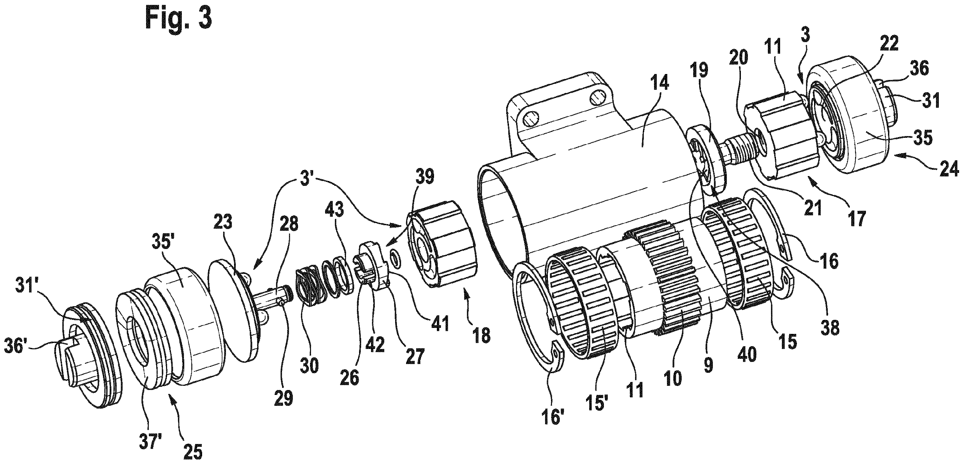

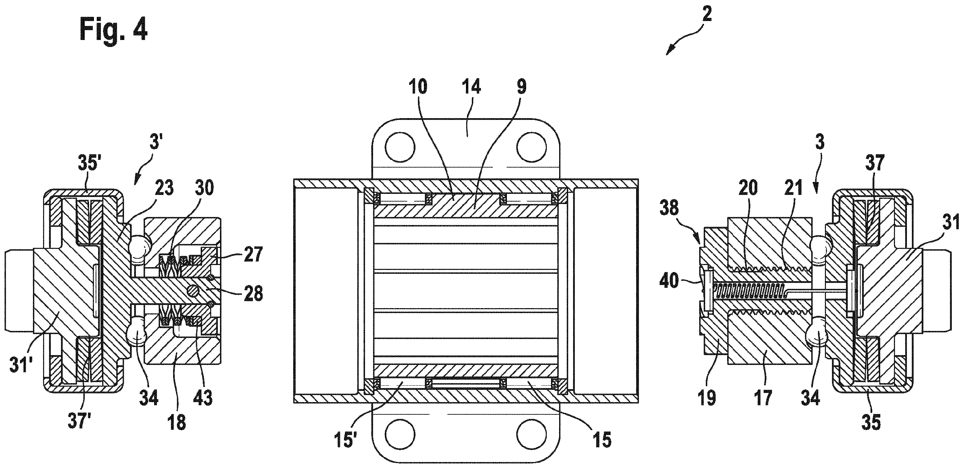

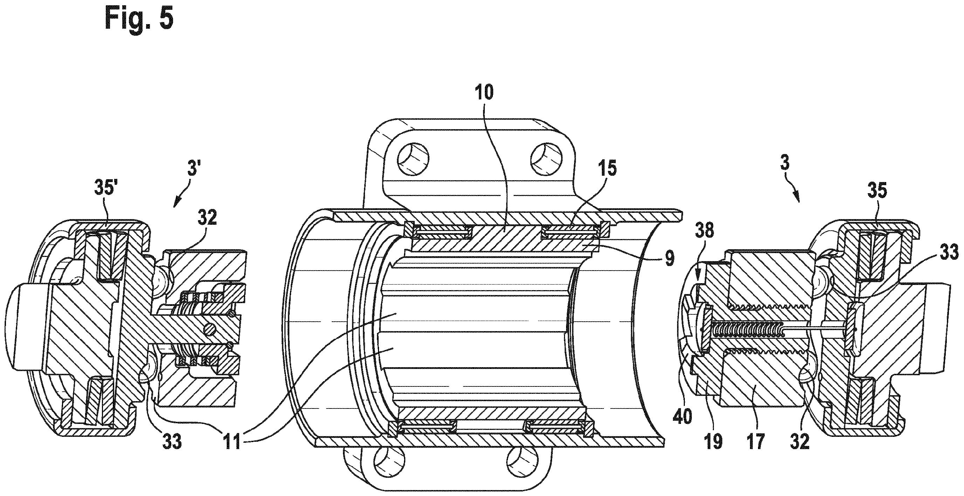

Die Figuren 3 bis 5 zeigen die erfindungsgemäße Spreizeinheit 2 nach Fig.2 in weiteren Darstellungen und Ansichten und dienen einer Verdeutlichung der vorstehend aufgeführten Sachverhalte und des Aufbaus.

### Bezugszeichenliste

- 1: Trommelbremse
- 2: Spreizeinheit
- 3: Kugel-Rampen-Vorrichtung
- 4: Bremsschuh
- 5: Bremsbelag
- 6: Bremstrommel
- 7: Innenwand
- 8: Antriebseinheit
- 9: Antriebshülse
- 10: Außenverzahnung
- 11: Axialführung (Axialverzahnung, Keilverzahnung)
- 12: Ende
- 13: Ende
- 14: Gehäuse
- 15: Rolllager (Nadellager)
- 16: Sicherungselement
- 17: Betätigungskolben
- 18: Betätigungskolben
- 19: Nachstellkolben
- 20: Gewindebohrung
- 21: Gewindeabschnitt
- 22: Spreizkolben
- 23: Spreizkolben
- 24: Spreizkolbeneinheit
- 25: Spreizkolbeneinheit
- 26: Nachstelleinrichtung
- 27: Rasthülse
- 28: Schaft
- 29: Querstift
- 30: Druckfeder
- 31: Bremsschuhaufnahme
- 32: Vertiefung
- 33: Vertiefung
- 34: Kugel
- 35: Außenhülse
- 36: Querschlitz
- 37: Federelement
- 38: Zahnkranz
- 39: Zahnkranz
- 40: Rampe
- 41: Rampe
- 42: Kragen
- 43 44 A: Achse

## Patentansprüche

1. Elektromechanisch antreibbare Spreizeinheit (2) für eine Trommelbremse (1), umfassend ein Gehäuse (14) und zwei in Bezug auf das Gehäuse (14) verdrehgesichert angeordneten erste und zweite Bremsschuhaufnahmen (31,31'), welche linear entlang einer Achse (A) voneinander weg jeweils in eine Spreizrichtung (S, S') sowie zueinander jeweils in eine Löserichtung (L,L') betätigbar sind und auf jeweils ein erstes und ein zweites, mit jeweils einem Bremsbelag (5,5') versehenes Bremsschuh (4,4') einwirken wobei die Linearbewegung der Bremsschuhaufnahmen (31,31') durch zwei Kugel-Rampen-Vorrichtungen (3,3') erzeugt wird, wobei eine erste Kugel-Rampen-Vorrichtung (3) einen ersten um die Achse (A) drehbar angeordneten Betätigungskolben (17) und eine zweite Kugel-Rampen-Vorrichtung (3') einen zweiten um die Achse (A) drehbar angeordneten Betätigungskolben (18) umfasst und wobei eine Nachstelleinrichtung (26) zum Ausgleich eines durch Verschleiß der Bremsbeläge (5,5') sich erhöhenden Betätigungswegs achszentriert und im Wesentlichen zwischen den Betätigungskolben (17,18) innerhalb des Gehäuses (14) angeordnet ist, **dadurch gekennzeichnet, dass** die Nachstelleinrichtung (26) einen im Kraftfluss mit dem ersten Betätigungskolben (17) stehenden Nachstellkolben (19) und eine mit dem Nachstellkolben (19) über axiale Zahnkränze (38,39) im Eingriff stehende Rasthülse (27) umfasst, wobei die Rasthülse (27) gegenüber der zweiten Bremsschuhaufnahme (31') verdrehgesichert, gegenüber dem zweiten Betätigungskolben (18) axial begrenzt verschiebbar sowie gegen den Nachstellkolben (19) elastisch vorgespannt angeordnet ist.

2. Spreizeinheit (2) nach Anspruch 1 **dadurch gekennzeichnet, dass** die Betätigungskolben (17,18) axial schwimmend in einer Antriebshülse (9) angeordnet und gegen diese verdrehgesichert sind, wobei die Antriebshülse (9) von einer elektromechanischen Antriebseinheit (8) mit einem Drehmoment versehen wird und in dem Gehäuse (14) um die Achse (A) drehbar gelagert ist.

3. Spreizeinheit (2) nach Anspruch 1 **dadurch gekennzeichnet, dass** die Zahnkränze (38,39) miteinander korrespondierend auf einem gleichen Umfangskreis durch in Umfangsrichtung ausgerichtete und geneigte Rampen (40,41) derart ausgebildet sind, dass deren gegenseitige Verdrehung in eine Umfangsrichtung gesperrt ist und in die entgegengesetzte Umfangsrichtung eine axial gerichtete Kraft bewirkt.

4. Spreizeinheit (2) nach Anspruch 1 **dadurch gekennzeichnet, dass** die zweite Kugel-Rampen-Vorrichtung (3') einen gegenüber der zweiten Bremsschuhaufnahme (31') verdrehgesichert angeordneten Spreizkolben (23) umfasst, wobei der Spreizkolben (23) einen in Richtung erster Betätigungskolben (17) vorgestreckten Schaft (28) aufweist und die Rasthülse (27) auf dem Schaft (28) verdrehgesichert sowie axial verschiebbar geführt angeordnet ist.

5. Spreizeinheit (2) nach Anspruch 1 **dadurch gekennzeichnet, dass** die Rasthülse (27) durch eine Druckfeder (29) gegen den Nachstellkolben (19) gepresst ist, wobei die Druckfeder (29) sich an dem zweiten Betätigungskolben (18) abstützt.

6. Spreizeinheit (2) nach Anspruch 1 **dadurch gekennzeichnet, dass** der erste Betätigungskolben (17) und der Nachstellkolben (19) über eine mit der Achse (A) koaxiale Schraubengewindeverbindung miteinander verbunden sind.

7. Spreizeinheit (2) nach Anspruch 1 **dadurch gekennzeichnet, dass** jede Bremsschuhaufnahme (31,31`) in Richtung jeweils zugeordneter Kugel-Rampen-Vorrichtung (3,3'), unter Kompression eines dazwischen vorgespannt angeordneten Federelements (37,37'), axial verschiebbar ist.

8. Spreizeinheit (2) nach Anspruch 1 **dadurch gekennzeichnet, dass** die die Spreizeinheit (2) in der Trommelbremse (1) schwimmend entlang der Achse (A) gelagert ist.

9. Trommelbremse 1 umfassend wenigstens eine Spreizeinheit (2) nach einem der vorstehenden Ansprüche.

## Claims

1. Electromechanically drivable spreading unit (2) for a drum brake (1), comprising a housing (14) and two first and second brake shoe holders (31, 31') which are arranged in a rotationally locked manner in relation to the housing (14), can be actuated linearly along an axis (A) away from one another in each case in a spreading direction (S, S') and towards one another in each case in a releasing direction (L, L'), and in each case act on a first and a second brake shoe (4, 4') provided in each case with a brake lining (5, 5'), the linear movement of the brake shoe holders (31, 31') being generated by way of two ball ramp apparatuses (3, 3'), a first ball ramp apparatus (3) comprising a first actuating piston (17) which is arranged such that it can be rotated about the axis (A), and a second ball ramp apparatus (3') comprising a second actuating piston (18) which is arranged such that it can be rotated about the axis (A), and an adjusting device (26) for compensating for an increasing actuating travel as a result of wear of the brake linings (5, 5') being arranged in an axially centred manner and substantially between the actuating pistons (17, 18) within the housing (14), **characterized in that** the adjusting device (26) comprises an adjusting piston (19), lying in the force flow with the first actuating piston (17), and a latching sleeve (27), in engagement with the adjusting piston (19) via axial toothed rims (38, 39), the latching sleeve (27) being arranged in a rotationally locked manner with respect to the second brake shoe holder (31'), in a displaceable manner to an axially limited extent with respect to the second actuating piston (18), and in an elastically preloaded manner against the adjusting piston (19).

2. Spreading unit (2) according to Claim 1, **characterized in that** the actuating pistons (17, 18) are arranged in a drive sleeve (9) in an axially floating manner and are rotationally locked with respect to the said drive sleeve (9), the drive sleeve (9) being provided with a torque by an electromechanical drive unit (8) and being mounted in the housing (14) a select can be rotated about the axis (A).

3. Spreading unit (2) according to Claim 1, **characterized in that** the toothed rims (38, 39) are configured so as to correspond with one another on an identical circumferential circle by way of ramps (40, 41) which are inclined and oriented in the circumferential direction, in such a way that their mutual rotation is blocked in one circumferential direction and brings about an axially directed force in the opposite circumferential direction.

4. Spreading unit (2) according to Claim 1, **characterized in that** the second ball ramp apparatus (3') comprises a spreading piston (23) which is arranged in a rotationally locked manner with respect to the second brake shoe holder (31'), the spreading piston (23) having a shaft (28) which is thrust out in the direction of the first actuating piston (17), and the latching sleeve (27) being arranged on the shaft (28) in a manner which is rotationally locked and guided axially displaceably.

5. Spreading unit (2) according to Claim 1, **characterized in that** the latching sleeve (27) is pressed against the adjusting piston (19) by way of a compression spring (29), the compression spring (29) being supported on the second actuating piston (18).

6. Spreading unit (2) according to Claim 1, **characterized in that** the first actuating piston (17) and the adjusting piston (19) are connected to one another via a screw thread connection which is coaxial with the axis (A).

7. Spreading unit (2) according to Claim 1, **characterized in that** each brake shoe holder (31, 31') can be displaced axially in the direction of a respective associated ball ramp apparatus (3, 3'), with compression of the spring element (37, 37') which is arranged in a preloaded manner in between.

8. Spreading unit (2) according to Claim 1, **characterized in that** the spreading unit (2) is mounted in the drum brake (1) in a floating manner along the axis (A).

9. Drum brake (1) comprising at least one spreading unit (2) according to one of the preceding claims.

## Revendications

1. Unité d'écartement (2) à entraînement électromécanique pour un frein à tambour (1), comprenant un boîtier (14) et deux premier et deuxième logements de segment de frein (31, 31') agencés de manière bloquée en rotation par rapport au boîtier (14), qui peuvent être actionnés linéairement le long d'un axe (A) en s'écartant l'un de l'autre respectivement dans une direction d'écartement (S, S') ainsi que l'un vers l'autre respectivement dans une direction de desserrement (L, L') et qui agissent respectivement sur un premier et un deuxième segment de frein (4, 4') pourvu respectivement d'une garniture de frein (5, 5'), le mouvement linéaire des logements de segment de frein (31, 31') étant généré par deux dispositifs à billes et rampes (3, 3'), un premier dispositif à billes et rampes (3) comprenant un premier piston d'actionnement (17) agencé de manière rotative autour de l'axe (A), et un deuxième dispositif à billes et rampes (3') comprenant un deuxième piston d'actionnement (18) agencé de manière rotative autour de l'axe (A), et un dispositif de rattrapage (26) pour compenser une course d'actionnement augmentée par l'usure des garnitures de frein (5, 5') étant centré sur l'axe et agencé essentiellement entre les pistons d'actionnement (17, 18) à l'intérieur du boîtier (14), **caractérisé en ce que** le dispositif de rattrapage (26) comprend un piston de rattrapage (19) situé dans le flux de force avec le premier piston d'actionnement (17) et une douille d'encliquetage (27) en prise avec le piston de rattrapage (19) par l'intermédiaire de couronnes dentées axiales (38, 39), la douille d'encliquetage (27) étant agencée de manière bloquée en rotation par rapport au deuxième logement de segment de frein (31'), de manière coulissante axialement de manière limitée par rapport au deuxième piston d'actionnement (18) et de manière précontrainte élastiquement contre le piston de rattrapage (19).

2. Unité d'écartement (2) selon la revendication 1, **caractérisée en ce que** les pistons d'actionnement (17, 18) sont agencés de manière axialement flottante dans une douille d'entraînement (9) et sont bloqués en rotation par rapport à celle-ci, la douille d'entraînement (9) étant pourvue d'un couple de rotation par une unité d'entraînement électromécanique (8) et étant montée dans le boîtier (14) de manière rotative autour de l'axe (A).

3. Unité d'écartement (2) selon la revendication 1, **caractérisée en ce que** les couronnes dentées (38, 39) sont configurées en correspondance l'une avec l'autre sur un même cercle circonférentiel par des rampes (40, 41) orientées dans la direction circonférentielle et inclinées, de telle sorte que leur rotation mutuelle dans une direction circonférentielle est bloquée et produit une force orientée axialement dans la direction circonférentielle opposée.

4. Unité d'écartement (2) selon la revendication 1, **caractérisée en ce que** le deuxième dispositif à billes et rampes (3') comprend un piston d'écartement (23) agencé de manière bloquée en rotation par rapport au deuxième logement de segment de frein (31'), le piston d'écartement (23) présentant une tige (28) avancée en direction du premier piston d'actionnement (17) et la douille d'encliquetage (27) étant agencée sur la tige (28) de manière bloquée en rotation et guidée de manière coulissante axialement.

5. Unité d'écartement (2) selon la revendication 1, **caractérisée en ce que** la douille d'encliquetage (27) est pressée contre le piston de rattrapage (19) par un ressort de pression (29), le ressort de pression (29) s'appuyant sur le deuxième piston d'actionnement (18).

6. Unité d'écartement (2) selon la revendication 1, **caractérisée en ce que** le premier piston d'actionnement (17) et le piston de rattrapage (19) sont reliés l'un à l'autre par l'intermédiaire une liaison par filetage coaxiale à l'axe (A).

7. Unité d'écartement (2) selon la revendication 1, **caractérisée en ce que** chaque logement de segment de frein (31, 31') est coulissant axialement en direction respectivement du dispositif à billes et rampes (3, 3') associé, avec compression d'un élément à ressort (37, 37') agencé en précontrainte entre eux.

8. Unité d'écartement (2) selon la revendication 1, **caractérisée en ce que** l'unité d'écartement (2) est montée de manière flottante le long de l'axe (A) dans le frein à tambour (1).

9. Frein à tambour 1 comprenant au moins une unité d'écartement (2) selon l'une quelconque des revendications précédentes.
